# EUROPÄISCHE PATENTSCHRIFT

(11) **EP 3 791 116 B1**
(45) Veröffentlichungstag und Bekanntmachung des Hinweises auf die Patenterteilung: **11.02.2026**
(21) Anmeldenummer: 19718655.4
(22) Anmeldetag: 15.04.2019
(51) Int. Cl.: F24H 1/18, F24D 11/02, F24D 17/00, F24D 19/10, F28D 20/00

(54) **HEIZSYSTEM FÜR EIN GEBÄUDE**
HEATING SYSTEM FOR A BUILDING
SYSTÈME DE CHAUFFAGE POUR UN BÂTIMENT

(30) Priorität: 09.05.2018 DE 102018111099
(43) Veröffentlichungstag der Anmeldung: 17.03.2021
(73) Patentinhaber: Westnetz GmbH, 44139 Dortmund (DE)
(72) Erfinder: BECKER, Ralf-Ernst, 44879 Bochum (DE); FUCHS, Christopher, 45131 Essen (DE); FREUNDSCHUH, Michael, 59368 Werne (DE); FRERICHMANN, Engelbert, 45721 Haltern (DE); MILBRADT, Michael, 44149 Dortmund (DE)
(74) Vertreter: Cohausz & Florack
(86) Internationale Anmeldenummer: PCT/EP2019/059602
(87) Internationale Veröffentlichungsnummer: WO 2019/214906

(56) Entgegenhaltungen:
- EP-A1- 3 173 703
- EP-A2- 2 811 233
- WO-A1-2014/027936
- DE-A1- 102011 052 452
- DE-A1- 102011 052 452
- US-A1- 2009 211 567
- US-A1- 2012 298 204
- US-A1- 2017 059 206

## Beschreibung

Die Anmeldung betrifft ein Heizsystem für ein Gebäude, umfassend mindestens eine Heizvorrichtung, eingerichtet zum Erwärmen von Wasser, welches der Heizvorrichtung zuleitbar ist, und mindestens einen ersten Warmwasserspeicher, wobei der erste Warmwasserspeicher mit der Heizvorrichtung über mindestens eine erste Hinleitung zum Hinleiten von erwärmtem Wasser zu dem ersten Warmwasserspeicher und über mindestens eine erste Rückleitung zum Rückleiten von Wasser zu der Heizvorrichtung verbunden ist. Darüber hinaus betrifft die Anmeldung ein Verfahren zum Betreiben eines Heizsystems und eine (elektrische) Energie-zu-Wärme Anordnung.

Heutzutage werden zur Erzeugung von elektrischer Energie vermehrt Erzeuger eingesetzt, die auf regenerativen Quellen basieren. Beispielhafte und nicht abschließende regenerative Erzeuger sind Photovoltaikanlagen oder Windkraftanlagen. Durch den vermehrten Einsatz von derartigen regenerativen Erzeugern gestaltet sich die Netzsteuerung, insbesondere die Netzregelung und/oder Netzstabilisierung, des Stromnetzes, an das die regenerativen Erzeuger angeschlossen sind, schwierig. Grund hierfür ist, dass die Erzeugung von elektrischer Energie durch derartige regenerative Erzeuger witterungs-, jahres- und/oder tageszeitlich bedingt Schwankungen unterworfen ist.

Die Schwankungen führen in einem Stromnetz dazu, dass es Zeiträume gibt, in denen durch die Erzeuger mehr Energie in das Stromnetz gespeist wird, als gleichzeitig aus dem Stromnetz entnommen wird. Vorliegend wird hierunter eine Überlast des Stromnetzes verstanden.

Um das Stromnetz in solchen Zeiträumen stabil zu halten, , werden in der Praxis in der Regel regenerative Erzeuger im Rahmen des Einspeisemanagements deaktiviert oder abgeriegelt.. Grundsätzlich ist es jedoch auch aus dem Stand der Technik bekannt, überschüssige elektrische Energie in Batterien, Pumpspeicherwerken oder dergleichen zu speichern. Daneben ist es bekannt, die überschüssige Energie bzw. Leistung in Wasserstoff oder in Wärme zu wandeln.

Diese bekannten Lösungen haben Nachteile. So ist die Speicherung von überschüssiger Energie in Batterien mit hohen Kosten sowie Verlusten verbunden. Auch das Betreiben von Pumpspeicherwerken oder Vorrichtungen zum Wandeln der elektrischen Energie in Wasserstoff sind kostenintensiv und haben einen schlechten Wirkungsgrad.

Wie bereits beschrieben, sind beispielsweise elektrische Energie-zu-Wärme Vorrichtungen bzw. Anordnungen (Power to Heat (P2H)) bekannt, bei denen elektrische Energie in Wärme gewandelt wird und diese zum Beispiel in ein Nah- und/oder Fernwärmenetz eingespeist wird. Auch kann es vorkommen, dass wärmeintensive Industriebetriebe über eine Energie-zu-Wärme Vorrichtung verfügen.

Bei den zuvor genannten elektrischen Energie-zu-Wärme Vorrichtungen ist von Nachteil, dass beispielsweise ein Nah- und/oder Fernwärmenetz zur Nutzung der thermischen Energie vorhanden sein muss. Problematisch bei einer Energie-zu-Wärme Anordnung eines wärmeintensiven Industriebetriebs ist im Kontext der Sektorenkopplung in der Energiewende regelmäßig dessen Standort im urbanen Raum, der in der Regel kein Netzengpassgebiet darstellt. Diese liegen insbesondere in den ländlichen Bereichen, in denen eine Vielzahl von regenerativen Erzeugern in Form von Windkraft- und Photovoltaikanlagen installiert ist. In diesen Gebieten fehlen jedoch derartige Anordnungen, obwohl gerade in diesen Gebieten ein Bedarf an einer Nutzung der überschüssigen elektrischen Energie besteht.

In diesen ländlichen Gebieten finden sich zwar eine Vielzahl von Gebäuden, beispielsweise private Haushalte und kleinere Gewerbetriebe, die jeweils über mindestens ein Heizungssystem verfügen. Bei den konventionellen Heizungssystemen ist es jedoch nicht möglich, überschüssige elektrische Energie in Wärmeenergie zu wandeln, die in dem jeweiligen Gebäude verbraucht werden kann. Grund hierfür ist der Aufbau eines konventionellen Heizungssystems. l Beispiele für derartige Heizungssysteme sind in den Dokumenten WO 2014/027936 A1, US 2017/059206 A1 und DE 202011 052452 A1 gezeigt.

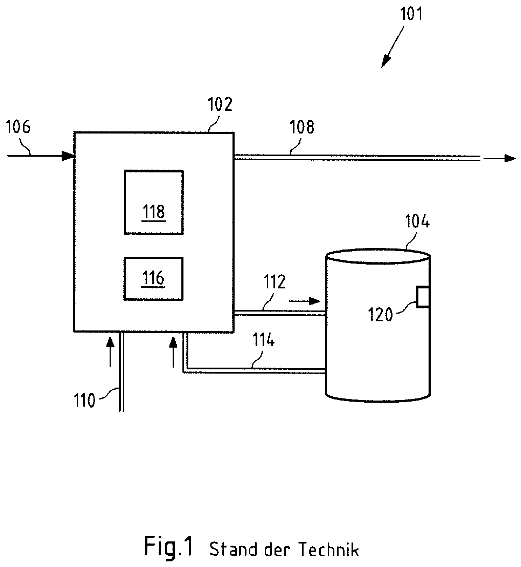

Die Figur 1 zeigt ein weiteres beispielhaftes Heizungssystem 101 gemäß dem Stand der Technik.

Das Heizungssystem 101 umfasst eine Heizvorrichtung 102 und einen über ein Rohrleitungssystem 112, 114 mit der Heizvorrichtung 102 fluidisch verbundenen Warmwasserspeicher 104. Die Heizvorrichtung 102 weist mindestens eine Pumpe 116 zum Fördern von Wasser und mindestens eine Brenneinrichtung 118 bzw. einen Brenner 118 zum Erwärmen von Wasser auf. Über einen Eingang 106 wird der Brenner 118 mit einem geeigneten Brennstoff (z.B. Gas, Öl etc.) versorgt.

Zudem verfügt das Heizungssystem 101 über mindestens eine Hinleitung 108 zum Leiten von erwärmtem Wasser zu mindestens einer (nicht gezeigten) Heizeinheit, wie einem Heizkörper, und eine Rückleitung 110 zum Erhalten des (erkalteten) Wassers von der mindestens einen Heizeinheit.

Um beispielsweise eine Heizeinheit zu erwärmen, wird in einem ersten Betriebsmodus des Heizungssystems 101 Wasser, das über die Rückleitung 110 erhalten wird, von dem Brenner 118 erwärmt und durch die Pumpe 116 über die Hinleitung 108 zu der Heizeinheit geleitet.

Der als Trinkwasserspeicher gebildete Warmwasserspeicher 104 dient dazu, einem Nutzer eines Gebäudes Warmwasser über mindestens eine Entnahmeeinrichtung (z.B. Armatur) zur Verfügung zu stellen. Ein (nicht gezeigtes) Rohleitungssystem kann hierzu an dem Warmwasserspeicher 104 angeschlossen sein.

Die Wassertemperatur des in dem Warmwasserspeicher 104 gespeicherten Wassers wird durch eine Temperaturmesseinrichtung 120 gemessen und mit einer vorgegebenen minimal zulässigen Temperatur verglichen. Wird ein Erreichen oder Unterschreiten der minimal zulässigen Temperatur detektiert, so wird die Heizvorrichtung 102 in einen zweiten Betriebsmodus gesetzt. Hierzu wird insbesondere eine (nicht gezeigte) Ventileinrichtung in der Heizvorrichtung 102 derart eingestellt, dass Wasser aus der Rückleitung 114 (und nicht 110) zu dem Brenner 118 geleitet und durch die Pumpe 116 in die Hinleitung 112 (und nicht 108) geleitet wird. Insbesondere wird in diesem Betriebsmodus das durch die Rückleitung 114 erhaltene Wasser durch den Brenner 118 erwärmt. Das erwärmte Wasser wird mittels der Pumpe 116 in den Warmwasserspeicher 104 geleitet bzw. befördert. Die Heizvorrichtung 102 verbleibt in der Regel so lange in dem zweiten Betriebsmodus, bis die Wassertemperatur des in dem Warmwasserspeicher 104 befindlichen Wassers eine vorgegebene Solltemperatur (wieder) erreicht hat.

Ein derartiges konventionelles Heizungssystem verfügt jedoch nicht über eine Möglichkeit, überschüssige elektrische Energie in Wärme bzw. thermische Energie zu wandeln. Zwar hat es im Stand der Technik Überlegungen gegeben, den Wärmewasserspeicher mit einer elektrisch betriebenen Heizeinrichtung (z.B. einen Heizstab) nachzurüsten.

Dies hat sich jedoch in der Praxis als kaum realisierbar erwiesen. So ist bereits der Einbau in einen vorhandenen Warmwasserspeicher komplex und aufwendig sowie mit erheblichen hygienischen Anforderungen verbunden. Zudem werden das Heizungssystem und insbesondere das Fördern von Wasser in dem Heizungssystem durch die Heizvorrichtung bzw. deren Pumpe gesteuert. Bei einer Nachrüstung einer elektrisch betriebenen Heizeinrichtung ist daher auch die Implementierung einer neuen Steuerung für das Heizungssystem erforderlich.

Daher liegt der vorliegenden Anmeldung die Aufgabe zugrunde, ein Heizsystem für ein Gebäude bereitzustellen, welches in einfacher Weise eine Wandlung von elektrischer Energie in nutzbare Wärmeenergie, insbesondere bei einem konventionellen Heizungssystem, ermöglicht.

Die Aufgabe wird gemäß einem ersten Aspekt der Anmeldung durch ein Heizsystem für ein Gebäude nach Anspruch 1 gelöst. Das Heizsystem umfasst mindestens eine Heizvorrichtung. Die Heizvorrichtung ist zum Erwärmen von Wasser eingerichtet, welches der Heizvorrichtung zuleitbar ist. Das Heizsystem umfasst mindestens einen ersten Warmwasserspeicher. Der erste Warmwasserspeicher ist mit der Heizvorrichtung über mindestens eine erste Hinleitung zum Hinleiten von erwärmtem Wasser zu dem ersten Warmwasserspeicher und über mindestens eine erste Rückleitung zum Rückleiten von Wasser zu der Heizvorrichtung verbunden. Das Heizsystem umfasst mindestens eine Energie-zu-Wärme Anordnung. Die Energie-zu-Wärme Anordnung umfasst mindestens einen zweiten Warmwasserspeicher mit mindestens einer elektrisch betreibbaren Heizeinrichtung. Die elektrisch betreibbare Heizeinrichtung ist zum Erwärmen des in dem zweiten Warmwasserspeicher befindlichen Wassers eingerichtet. Die Energie-zu-Wärme Anordnung umfasst mindestens eine erste in der ersten Rückleitung angeordnete Ventileinrichtung. Die erste Ventileinrichtung ist zum Leiten von Wasser aus der ersten Rückleitung über mindestens eine zweite Hinleitung in den zweiten Warmwasserspeicher eingerichtet. Die Energie-zu-Wärme Anordnung umfasst mindestens eine zweite mit dem zweiten Warmwasserspeicher verbundene Rückleitung. Die Rückleitung ist zum Leiten von Wasser aus dem zweiten Warmwasserspeicher zu der Heizvorrichtung eingerichtet.

Im Gegensatz zum Stand der Technik wird anmeldungsgemäß ein Heizsystem bereitgestellt, bei dem in einfacher Weise eine Wandlung von elektrischer Energie in nutzbare Wärmeenergie ermöglicht ist. Insbesondere zeichnet sich die vorliegende Anmeldung dadurch aus, dass durch eine anmeldungsgemäße Energie-zu-Wärme Anordnung bei einem (konventionellen) Heizungssystem eine Rücklauftemperaturanhebung bereitgestellt werden kann. Diese Rücklauftemperaturanhebung kann insbesondere außentemperatur-unabhängig genutzt werden. Für eine Nachrüstung eines (konventionellen) Heizungssystems ist bei dem Heizungssystem lediglich ein Einbau einer Ventileinrichtung erforderlich. Warmwasserspeicher, Heizvorrichtung, Steuerung des Heizungssystems etc. können unverändert bleiben. Mit anderen Worten kann eine anmeldungsgemäße Energie-zu-Wärme Anordnung in einfacher Weise mit einem (konventionellen) Heizungssystem (nachträglich) gekoppelt werden. Überschüssige elektrische Energie kann, auch in einem ländlichen Bereich, mit einem besonders guten Wirkungsgrad genutzt werden. Das anmeldungsgemäße Heizsystem kann insbesondere aus mindestens einem Heizungssystem und mindestens einer anmeldungsgemäßen Energie-zu-Wärme Anordnung gebildet sein. Das Heizungssystem kann mindestens eine Heizvorrichtung und mindestens einen ersten Warmwasserspeicher umfassen.

Die mindestens eine Heizvorrichtung ist zum Erwärmen von Wasser eingerichtet.

Erfindungsgemäss sind (konventionelle) ölbetriebene oder gasbetriebene Heizvorrichtungen vorgesehen.

Die mindestens eine Heizvorrichtung ist fluidisch mit mindestens einem ersten Warmwasserspeicher, insbesondere einem Trinkwasserspeicher, über ein erstes Rohrleitungsnetz verbunden. Zwischen der Heizvorrichtung und dem ersten Warmwasserspeicher sind zumindest eine erste Hinleitung und eine erste Rückleitung angeordnet. Über die erste Hinleitung kann Wasser, das von der Heizvorrichtung erwärmt worden ist, zu dem bzw. in den ersten Warmwasserspeicher geleitet werden.

Über die erste Rückleitung kann (erkaltetes) Wasser aus dem ersten Warmwasserspeicher zu der Heizvorrichtung geleitet werden, um insbesondere dieses Wasser (erneut) zu erwärmen und wieder in den ersten Warmwasserspeicher über die erste Hinleitung einzuspeisen.

Um das Wasser zu leiten bzw. zu fördern kann die Heizvorrichtung über mindestens eine Pumpe verfügen. Die Pumpe kann eingerichtet sein, Wasser in den ersten Warmwasserspeicher über die Hinleitung und aus dem ersten Warmwasserspeicher über die Rückleitung zu leiten. Es versteht sich, dass alternativ oder zusätzlich mindestens eine weitere Pumpe in dem Heizsystem vorgesehen sein kann.

Wie bereits beschrieben wurde, umfasst das Heizsystem anmeldungsgemäß mindestens eine Energie-zu-Wärme Anordnung. Die Energie-zu-Wärme Anordnung umfasst mindestens einen zweiten Warmwasserspeicher. Das in dem zweiten Warmwasserspeicher befindliche Wasser kann durch mindestens eine elektrisch betreibbare Heizeinrichtung (und nicht durch die zuvor beschriebene Heizvorrichtung) erwärmt werden. Insbesondere kann die elektrisch betreibbare Heizeinrichtung, beispielsweise ein Heizstab, in dem zweiten Warmwasserspeicher integriert sein. Durch eine Beaufschlagung der elektrisch betreibbaren Heizeinrichtung mit einem elektrischen Strom kann die Heizeinrichtung erwärmt und die erzeugte Wärme an das die Heizeinrichtung (z.B. den Heizstab) zumindest teilweise umgebende Wasser abgegeben werden.

Um die anmeldungsgemäß mindestens eine Energie-zu-Wärme Anordnung mit dem Heizungssystem fluidisch zu koppeln, ist mindestens eine erste Ventileinrichtung in der ersten Rückleitung angeordnet. Die erste Ventileinrichtung kann vorzugsweise ein Ventil, wie ein Drei-Wege-Ventil, oder alternativ mehrere Ventile, wie mindestens zwei Zwei-Wege-Ventile, umfassen.

Die erste Ventileinrichtung ist eingerichtet, Wasser aus der ersten Rückleitung über eine mit der ersten Ventileinrichtung gekoppelte zweite Hinleitung in den zweiten Warmwasserspeicher zu leiten. Mit anderen Worten kann zu erwärmendes Wasser aus dem ersten Warmwasserspeicher über die erste Rückleitung, die erste Ventileinrichtung und die zweite Hinleitung in den zweiten Warmwasserspeicher gefördert werden. Hier kann das Wasser erwärmt werden.

Ferner ist mindestens eine zweite Rückleitung vorgesehen. Über die zweite Rückleitung ist der zweite Warmwasserspeicher fluidisch mit der Heizvorrichtung gekoppelt. Über die zweite Rückleitung wird das (vor-)erwärmte Wasser aus dem zweiten Warmwasserspeicher zu der Heizvorrichtung geleitet. Die zur Erwärmung des bereits erwärmten Wassers erforderliche Energie zum Betreiben der Heizvorrichtung kann zumindest reduziert werden.

Die Förderung des Wassers durch die zweite Hin- und Rückleitung kann, aufgrund der anmeldungsgemäßen ersten Ventileinrichtung, durch die mindestens eine Pumpe der Heizvorrichtung in gleicher Weise bewirkt werden, wie ein Fördern von Wasser durch die erste Hin- und Rückleitung. Eine Anordnung einer zusätzlichen Pumpe oder Änderung der Steuerung der Pumpe der Heizvorrichtung kann entfallen.

Gemäß einer ersten Ausführungsform des anmeldungsgemäßen Heizsystems kann die Energie-zu-Wärme Anordnung mindestens eine erste Temperaturmesseinrichtung umfassen. Die erste Temperaturmesseinrichtung kann zum Messen einer ersten Wassertemperatur des durch die erste Rückleitung geleiteten Wassers eingerichtet sein. Die Energie-zu-Wärme Anordnung kann mindestens eine zweite Temperturmesseinrichtung umfassen. Die zweite Temperturmesseinrichtung kann zum Messen einer zweiten Wassertemperatur des in dem zweiten Warmwasserspeicher befindlichen Wassers eingerichtet sein. Die Energie-zu-Wärme Anordnung kann mindestens eine Steuereinrichtung umfassen. Die Steuereinrichtung kann zum Steuern der ersten Ventileinrichtung abhängig von der gemessenen ersten Wassertemperatur und der gemessenen zweiten Wassertemperatur eingerichtet sein. Die Steuereinrichtung kann in der Ventileinrichtung und/oder einer Temperaturmesseinrichtung und/oder einer separaten Vorrichtung angeordnet sein.

Vorzugsweise kann die erste Temperaturmesseinrichtung die erste Wassertemperatur in der ersten Rückleitung, in Wasserströmungsrichtung gesehen, vor der ersten Ventileinrichtung messen. Es versteht sich, dass gemäß anderen Varianten der Anmeldung auch die Wassertemperatur des in dem ersten Warmwasserspeicher befindlichen Wassers als erste Wassertemperatur verwendet werden kann.

Die erste gemessene Wassertemperatur und die zweite gemessene Wassertemperatur können einer Steuereinrichtung (oder einer separaten Auswerteeinrichtung) zur Verfügung gestellt werden. In einem Auswertevorgang kann beispielsweise die gemessene erste Wassertemperatur mit der gemessenen zweiten Wassertemperatur verglichen werden. Die Steuereinrichtung kann, basierend auf der Auswertung, ein Steuersignal erzeugen und beispielsweise die erste Ventileinrichtung entsprechend ansteuern. Insbesondere kann die Steuereinrichtung die erste Ventileinrichtung derart ansteuern, dass das Wasser aus dem ersten Warmwasserspeicher nur dann in den zweiten Warmwasserspeicher geleitet wird, wenn das Wasser in dem zweiten Warmwasserspeicher zumindest wärmer als das Wasser in dem ersten Warmwasserspeicher bzw. der ersten Rückleitung ist.

Gemäß einer bevorzugten Ausführungsform des anmeldungsgemäßen Heizsystems kann die erste Ventileinrichtung (z.B. ein Drei-Wege-Ventil, zwei Zwei-Wege-Ventile oder dergleichen) in einer ersten Ventileinrichtungsstellung zum Leiten von Wasser aus der ersten Rückleitung über die zweite Hinleitung in den zweiten Warmwasserspeicher eingerichtet sein. Die erste Ventileinrichtung kann in einer zweiten Ventileinrichtungsstellung zum Leiten des Wassers von dem ersten Warmwasserspeicher (unmittelbar) zu der Heizvorrichtung über die erste Rückleitung eingerichtet sein.

Die erste Ventileinrichtung kann, beispielsweise von der zuvor beschriebenen Steuereinrichtung, derart ansteuerbar sein, dass sie in der ersten Ventileinrichtungsstellung betrieben wird, wenn die erste Wassertemperatur geringer ist als die zweite Wassertemperatur. Alternativ oder vorzugsweise zusätzlich kann die erste Ventileinrichtung, beispielsweise von der zuvor beschriebenen Steuereinrichtung, derart ansteuerbar sein, dass sie in der zweiten Ventileinrichtungsstellung betrieben wird, wenn die erste Wassertemperatur gleich oder höher ist als die zweite Wassertemperatur. In einfacher und insbesondere in automatischer Weise kann das Wasser aus dem ersten Warmwasserspeicher nur dann in den zweiten Warmwasserspeicher geleitet werden, wenn das Wasser in dem zweiten Warmwasserspeicher zumindest wärmer als das Wasser in dem ersten Warmwasserspeicher bzw. der ersten Rückleitung ist.

Darüber hinaus kann gemäß einer weiteren Ausführungsform die elektrisch betreibbare Heizeinrichtung abhängig von einem Stromnetzzustand eines mit der elektrisch betreibbaren Heizeinrichtung verbindbaren Stromnetzes steuerbar sein. Insbesondere kann die elektrisch betreibbare Heizeinrichtung zumindest aktivierbar und deaktivierbar sein. Dies kann insbesondere von einem detektierbaren Stromnetzzustand abhängen. Unter einem Stromnetzzustand ist insbesondere ein Parameter bzw. Zustand des Stromnetzes zu verstehen, der angibt, ob in dem überwachten Stromnetz überschüssige elektrische Energie bzw. Leistung vorhanden ist (oder nicht). Die mindestens eine elektrisch betreibbare Heizeinrichtung kann, vorzugsweise bei Detektion von überschüssiger Energie in dem Stromnetz, aktiviert werden.

Vorzugsweise kann die elektrisch betreibbare Heizeinrichtung über mindestens eine ansteuerbare Schalteinheit verfügen, die zumindest zum Aktivieren und Deaktivieren der elektrisch betreibbaren Heizeinrichtung eingerichtet ist. Zusätzlich kann die Schalteinheit bzw. lokale Steuereinheit eingerichtet sein, den Stromfluss durch die Heizeinrichtung stufenartig oder bevorzugt stufenlos zwischen einem Minimalwert und einem Maximalwert einzustellen.

Gemäß einer Ausführungsform kann mindestens eine Überlasterfassungseinrichtung vorgesehen sein, eingerichtet zum Erfassen einer Überlast bzw. einer Überlastenergie (auch überschüssige elektrische Energie genannt) des Stromnetzes als Stromnetzzustand. Beispielweise können der Überlasterfassungseinrichtung (augenblickliche) Netzlastdaten zur Verfügung gestellt werden. Durch eine derartige Überlast im Stromnetz, insbesondere ein zu hoher Strom im Stromnetz, zum Beispiel aufgrund der von regenerativen Erzeugern eingespeisten Leistung, kann Beschädigungen an den Leitungen, Umspanneinrichtungen und sonstigen Komponenten des Stromnetzes zur Folge haben. Hierdurch kann es zu einem Ausfall des Stromnetzes kommen. Dies kann durch das anmeldungsgemäße Heizsystem reduziert und ggf. sogar verhindert werden.

Grundsätzlich ist die Erfassung einer Überlast in beliebiger Weise möglich. Vorzugsweise kann die Überlasterfassungseinrichtung mindestens eine Messeinrichtung umfassen, die zum Messen von mindestens einem Netzlastparameter eingerichtet ist. Alternativ kann die Überlasterfassungseinrichtung auch mit mindestens einer Messeinrichtung verbunden sein.

Die Überlasterfassungseinrichtung kann mindestens eine Auswerteeinrichtung umfassen, die zum Erfassen einer Überlast des Stromnetzes durch einen Vergleich des gemessenen Netzlastparameters mit einem vorgegebenen Netzlastgrenzwert eingerichtet ist. Beispielsweise kann die Überlasterfassungseinrichtung die Auswerteeinrichtung umfassen. Der Netzlastparameter kann bevorzugt kontinuierlich gemessen werden. Ferner kann kontinuierlich ein Vergleich zwischen dem gemessenen Netzlastparameter und einem Netzlastparametergrenzwert durchgeführt werden. Der Netzlastparametergrenzwert kann vorgegeben werden und gibt insbesondere einen maximal zulässigen Grenzwert für den erfassten Netzlastparameter an, bei welchem das Stromnetz (noch) in sicherer Weise betrieben werden kann. Übersteigt der gemessene Netzlastparameter den Netzlastparametergrenzwert, so kann es zu Beschädigung des Stromnetzes kommen. Durch die Vergleichsoperation kann eine Überlast zeitnah und in einfacher Weise erfasst werden. Eine Abführung der überschüssigen Energie kann bereitgestellt werden.

Es versteht sich, dass die Überlasterfassungseinrichtung auch eine voraussichtliche Überlast für einen zukünftigen Zeitraum Aufgrund von Wetterdaten, Netzlastparametern etc. prognostizieren kann. Es versteht sich ferner, dass die Messung des Netzlastparameters und/oder die Vergleichsoperation auch in vorgebbaren zeitlichen Abständen, beispielsweise periodisch, durchgeführt werden kann.

Darüber hinaus kann die Auswerteeinrichtung eingerichtet sein, in Abhängigkeit des gemessenen Netzlastparameters, beispielsweise in Abhängigkeit der Differenz zwischen dem gemessenen Netzlastparameter und dem vorgegebenen Netzlastgrenzwert, die abzuführende Überlastenergie zu bestimmen. Diese Bestimmung kann insbesondere kontinuierlich erfolgen. Indem aus dem gemessenen Netzlastparameter die aktuelle Überlastenergie bestimmt wird, ist es möglich, nur die Überlastenergie abzuführen. Es kann sichergestellt werden, dass stets die maximal mögliche Energiemenge geliefert werden kann. Ein Abschalten von regenerativen Erzeugern kann verhindert und insbesondere ein dynamischer Überlastschutz bereitgestellt werden.

Gemäß einer weiteren Ausführungsform kann eine (zentrale und z.B. entfernt von der elektrisch betreibbaren Heizeinrichtung angeordnete) Steuereinrichtung zur Steuerung der elektrisch betreibbaren Heizeinrichtung vorgesehen sein. Diese Steuereinrichtung kann eingerichtet sein, die elektrisch betreibbare Heizeinrichtung in Abhängigkeit der bestimmten abzuführenden Überlastenergie zu steuern. Insbesondere kann eine Mehrzahl von elektrisch betreibbaren Heizeinrichtung von anmeldungsgemäßen Energie-zu-Wärme Anordnungen entsprechend angesteuert werden.

Darüber hinaus kann vorzugsweise die Aktivierung und Deaktivierung der elektrisch betreibbaren Heizeinrichtung von dem augenblicklichen Zustand, insbesondere Wärmezustand, des zweiten Warmwasserspeichers abhängen. Gemäß einer Ausführungsform des anmeldungsgemäßen Heizsystems kann die Energie-zu-Wärme Anordnung mindestens eine zweite (zuvor beschriebene) Temperturmesseinrichtung umfassen, eingerichtet zum Messen mindestens einer zweiten Wassertemperatur des in dem zweiten Warmwasserspeicher befindlichen Wassers. Die elektrisch betreibbare Heizeinrichtung kann abhängig von der mindestens einen zweiten Wassertemperatur und einer maximal zulässigen Wassertemperatur des in dem zweiten Warmwasserspeicher befindlichen Wassers steuerbar sein. Hierdurch kann insbesondere eine Aktivierung der elektrisch betreibbaren Heizeinrichtung verhindert und/oder eine Deaktivierung bewirkt werden, wenn die maximale Wärmekapazität von dem zweiten Warmwasserspeicher bereits aufgenommen wurde.

Vorzugsweise kann mindestens eine Kapazitätsbestimmungseinrichtung vorgesehen sein. Die Kapazitätsbestimmungseinrichtung kann zum Bestimmen der maximal von dem zweiten Warmwasserspeicher (noch) aufnehmbaren elektrischen Energie bzw. Leistung, basierend auf der mindestens einen gemessenen zweiten Temperatur und der maximalen Wärmekapazität des zweiten Warmwasserspeichers, eingerichtet sein. Beispielsweise kann bei Detektion des Erreichens der maximalen Wärmekapazität des zweiten Warmwasserspeichers eine Deaktivierung bewirkt werden und/oder eine Aktivierung gesperrt sein.

Insbesondere können zumindest zwei zweite Temperturmesseinrichtungen an unterschiedlichen Positionen in dem zweiten Warmwasserspeicher angeordnet sein. Durch eine Mehrzahl von Temperaturmesseinrichtungen an insbesondere unterschiedlichen Positionen in dem zweiten Warmwasserspeicher kann die derzeit aufgenommene bzw. gespeicherte Wärmemenge mit einer höheren Genauigkeit bestimmt werden.

Bei einer Ausführungsform kann die bestimmte maximal von dem zweiten Warmwasserspeicher (noch) aufnehmbare elektrische Energie mindestens einer (zentralen) (zuvor beschriebenen) Steuereinrichtung bereitgestellt werden. Mit anderen Worten kann die zur Verfügung stehende Flexibilität eines Heizsystems einer zentralen Steuereinrichtung gemeldet werden. Diese Steuereinrichtung kann eingerichtet sein, die elektrisch betreibbare Heizeinrichtung in Abhängigkeit von detektierter überschüssiger Energie, insbesondere der bestimmten abzuführenden Überlastenergie, und der bereitgestellten maximal (noch) aufnehmbaren Energie zu steuern. Insbesondere kann eine Mehrzahl von Heizsystemen in einer Mehrzahl von Gebäuden vorgesehen und mit der zentralen Steuereinrichtung verbunden sein. Indem vorzugsweise jedes Heizsystem der zentralen Steuereinrichtung die jeweils bereitstellbare Flexibilität meldet, kann auch bei einer detektierten erheblichen Überlast diese in einfacher und umweltschonender Weise in nutzbare Energie umgewandelt werden.

Darüber hinaus kann vorzugsweise mindestens eine Abwesenheitsdetektionseinrichtung vorgesehen sein, die zum Detektieren einer Abwesenheit des mindestens einen Nutzers des Heizsystems für eine bestimmte (Abwesenheits-)Zeitdauer eingerichtet ist. Beispielsweise kann überwacht werden, ob aus dem ersten Warmwasserspeicher während einer vorgegebenen Zeitdauer (z.B. 24h, 48h etc.) Wasser über eine Entnahmeeinrichtung aus dem ersten Warmwasserspeicher entnommen wurde. Ist dies nicht der Fall, kann auf eine Abwesenheit des mindestens einen Nutzers geschlossen werden. Zumindest die elektrisch betreibbare Heizeinrichtung kann bei Detektion einer entsprechenden Abwesenheit nicht aktivierbar sein bzw. die Aktivierung kann gesperrt sein. Die Sperrung kann bis zur Detektion einer (erneuten) Anwesenheit des mindestens einen Nutzers, beispielsweise aufgrund einer detektierten Wasserentnahme, beibehalten werden. Dies kann beispielsweise einer zuvor beschriebenen zentralen Steuereinrichtung gemeldet werden.

Wie bereits beschrieben wurde, kann das Heizungssystem eine beliebige (konventionelle) Heizvorrichtung umfassen. Gemäß einer bevorzugten Ausführungsform des anmeldungsgemäßen Heizsystems kann die Heizvorrichtung eine gasbetriebene Heizvorrichtung sein. Die gasbetriebene Heizvorrichtung kann mindestens einen mit einem (öffentlichen) Gasleitungsnetz verbindbaren Gaseingang aufweisen. Die elektrisch betreibbare Heizeinrichtung kann abhängig von mindestens einem Gasleitungsnetzzustand, insbesondere von einem detektierten Gasmangel, des Gasleitungsnetzes steuerbar sein. Es ist erkannt worden, dass es bei niedrigen Temperaturen (z.B. < 0 °C für eine längere Zeitdauer) und der damit verbundenen hohen Nutzung bzw. Auslastung von Heizsystemen dazu kommen kann, dass in dem Gasleitungsnetz (augenblicklich) ein Gasmangel vorliegt. Um diesen zumindest zu reduzieren, wird gemäß einer Ausführungsform vorgeschlagen, bei Detektion eines Gasmangels die elektrisch betreibbare Heizeinrichtung zu aktivieren, um das Wasser des Heizsystems zu erwärmen. Die von dem Heizsystem in dieser Zeit verbrauchte Gasmenge kann zumindest reduziert werden. Das Gasleitungsnetz kann stabilisiert werden.

Insbesondere ermöglicht die vorliegende Anmeldung daher, Strom- und Gasschwankungen in den jeweiligen Netzen vorzugsweise flächendeckend zu stabilisieren. Mit diesem System kann eine systemdienliche Integration des dezentralen Einsatzes von elektrischen Energie-zu-Wärme Anordnungen in das Strom- und Gasverteilungsnetz bereitgestellt werden.

Vorzugsweise kann mindestens eine weitere Zustandserfassungseinrichtung vorgesehen sein. Die weitere Zustandserfassungseinrichtung kann zum Erfassen eines Gasmangels in dem Gasleitungsnetz als Gasnetzzustand eingerichtet sein. Die weitere Zustandserfassungseinrichtung kann vorzugsweise mindestens eine Messeinrichtung umfassen, eingerichtet zum Messen eines Gasdrucks in dem Gasleitungsnetz, an dem die Heizvorrichtung angeschlossen ist.

Gemäß einer Ausführungsform kann die weitere Zustandserfassungseinrichtung mindestens eine Auswerteeinrichtung umfassen, eingerichtet zum Vergleichen des gemessenen Gasdrucks mit einem vorgegebenen minimalen Sollgasdruck zum Erfassen eines Gasmangels. Eine (beispielsweise zuvor beschriebene) Steuereinrichtung der Energie-zu-Wärme Anordnung kann zur Steuerung der elektrisch betreibbaren Heizeinrichtung vorgesehen sein. Die Steuereinrichtung kann eingerichtet sein, die elektrisch betreibbare Heizeinrichtung bei Detektion eines Gasmangels, also z.B. bei Erreichen oder Unterschreiten des vorgegebenen minimalen Sollgasdrucks durch den gemessenen Gasdruck, zu aktivieren. Es versteht sich, dass auch hier die noch durch den zweiten Warmwasserspeicher aufnehmbare elektrische Energie berücksichtigt werden kann, um den Gasverbrauch zu reduzieren und das Netz im Ergebnis zu stabilisieren.

Gemäß einer besonders bevorzugten Ausführungsform des anmeldungsgemäßen Heizsystems kann die Energie-zu-Wärme Anordnung mindestens eine dritte mit der Heizvorrichtung verbundene Hinleitung umfassen. Die dritte Hinleitung kann zum Leiten von erwärmtem Wasser zu mindestens einer Heizeinheit (z.B. ein Heizkörper oder dergleichen) des Gebäudes eingerichtet sein. Die Energie-zu-Wärme Anordnung kann mindestens eine dritte mit der Heizvorrichtung verbundene Rückleitung umfassen. Die dritte Rückleitung kann zum Leiten von (erkaltetem) Wasser von der Heizeinheit des Gebäudes zu der Heizvorrichtung eingerichtet sein. Die Energie-zu-Wärme Anordnung kann mindestens eine zweite in der dritten Rückleitung angeordnete Ventileinrichtung umfassen. Die zweite Ventileinrichtung kann zum Leiten von Wasser aus der ersten Rückleitung über mindestens eine vierte Hinleitung in den zweiten Warmwasserspeicher eingerichtet sein. Die zweite Ventileinrichtung kann entsprechend der ersten Ventileinrichtung (z.B. Drei-Wege-Ventil, oder mehrere Ventile, wie mindestens zwei Zwei-Wege-Ventile) gebildet sein. Insbesondere kann hierdurch der Verbrauch von Brennstoff weiter reduziert und beispielsweise überschüssige elektrische Energie in Wärme gewandelt werden, wenn das in dem zweiten Warmwasserspeicher gespeicherte Warmwasser zusätzlich auch für die im Gebäude angeordneten Heizeinheiten (z.B. Heizkörper) eingesetzt wird.

Gemäß einer bevorzugten Ausführungsform des anmeldungsgemäßen Heizsystems kann die Energie-zu-Wärme Anordnung mindestens eine dritte Temperaturmesseinrichtung umfassen. Die dritte Temperaturmesseinrichtung kann zum Messen einer dritten Wassertemperatur des durch die dritte Rückleitung geleiteten Wassers eingerichtet sein. Die Energie-zu-Wärme Anordnung kann mindestens eine zweite (zuvor beschriebene) Temperturmesseinrichtung umfassen. Die zweite Temperturmesseinrichtung kann zum Messen einer zweiten Wassertemperatur des in dem zweiten Warmwasserspeicher befindlichen Wassers eingerichtet sein. Die Energie-zu-Wärme Anordnung kann mindestens eine Steuereinrichtung umfassen. Die Steuereinrichtung kann zum Steuern der mindestens einen zweiten Ventileinrichtung abhängig von der gemessenen dritten Wassertemperatur und der gemessenen zweiten Wassertemperatur eingerichtet sein. Vorzugsweise kann die dritte Temperaturmesseinrichtung die dritte Wassertemperatur in der dritten Rückleitung, in Wasserströmungsrichtung gesehen, vor der zweiten Ventileinrichtung messen.

Die dritte gemessene Wassertemperatur und die zweite gemessene Wassertemperatur können einer Steuereinrichtung (oder einer separaten Auswerteeinrichtung) zur Verfügung gestellt werden. In einem Auswertevorgang kann beispielsweise die gemessene dritte Wassertemperatur mit der gemessenen zweiten Wassertemperatur verglichen werden. Die Steuereinrichtung kann basierend auf der Auswertung ein Steuersignal erzeugen und beispielsweise die zweite Ventileinrichtung entsprechend ansteuern. Insbesondere kann die Steuereinrichtung die zweite Ventileinrichtung derart ansteuern, dass das Wasser aus dem ersten Warmwasserspeicher nur dann in den zweiten Warmwasserspeicher geleitet wird, wenn das Wasser in dem zweiten Warmwasserspeicher zumindest wärmer als das Wasser in der dritten Rückleitung ist.

Ferner kann die zweite Ventileinrichtung (z.B. ein Drei-Wege-Ventil, zwei Zwei-Wege-Ventile oder dergleichen) in einer ersten Ventileinrichtungsstellung zum Leiten von Wasser aus der dritten Rückleitung über die vierte Hinleitung in den zweiten Warmwasserspeicher eingerichtet sein. Die zweite Ventileinrichtung kann in einer zweiten Ventileinrichtungsstellung zum Leiten des Wassers von dem mindestens einen Heizspeicher (unmittelbar) zu der Heizvorrichtung über die dritte Rückleitung eingerichtet sein.

Die zweite Ventileinrichtung kann, beispielsweise von der zuvor beschriebenen Steuereinrichtung, derart ansteuerbar sein, dass sie in der ersten Ventileinrichtungsstellung betrieben wird, wenn die dritte Wassertemperatur geringer ist als die zweite Wassertemperatur. Alternativ oder vorzugsweise zusätzlich kann die zweite Ventileinrichtung, beispielsweise von der zuvor beschriebenen Steuereinrichtung, derart ansteuerbar sein, dass sie in der zweiten Ventileinrichtungsstellung betrieben wird, wenn die dritte Wassertemperatur gleich oder höher ist als die zweite Wassertemperatur. In einfacher und insbesondere in automatischer Weise kann das Wasser von einer Heizeinheit des Gebäudes nur dann in den zweiten Warmwasserspeicher geleitet werden, wenn das Wasser in dem zweiten Warmwasserspeicher zumindest wärmer als das Wasser in der dritten Rückleitung ist.

Unter einer Ventileinrichtungsstellung ist vorliegend mindestens eine Ventilstellung von mindestens einem Ventil der Ventileinrichtung zu verstehen. Für den Fall, dass die Ventileinrichtung eine Mehrzahl von Ventilen umfasst, kann hierunter eine entsprechende Mehrzahl von Ventilstellung zu verstehen sein.

Ein weiterer Aspekt der Anmeldung ist ein Verfahren zum Betreiben eines Heizsystems, insbesondere eines zuvor beschriebenen Heizsystems. Das Verfahren umfasst:
- Messen einer ersten Wassertemperatur des durch eine erste zwischen einem ersten Warmwasserspeicher und einer Heizvorrichtung des Heizsystems angeordnete Rückleitung geleiteten Wassers,
- Messen einer zweiten Wassertemperatur des in einem zweiten Warmwasserspeicher befindlichen Wassers,
- Steuern mindestens einer ersten in der Rückleitung angeordneten Ventileinrichtung abhängig von der gemessenen ersten Wassertemperatur und der gemessenen zweiten Wassertemperatur, derart, dass, wenn die erste Wassertemperatur geringer ist als die zweite Wassertemperatur, das Wasser aus der ersten Rückleitung über mindestens eine zweite Hinleitung in den zweiten Warmwasserspeicher geleitet wird, und wenn die erste Wassertemperatur gleich oder höher ist als die zweite Wassertemperatur, das Wasser durch die erste Rückleitung zu der Heizvorrichtung geleitet wird.

Ein noch weiterer Aspekt der Anmeldung ist eine Energie-zu-Wärme Anordnung für ein Heizungssystem mit mindestens einer Heizvorrichtung und mindestens einem ersten Warmwasserspeicher. Die Energie-zu-Wärme Anordnung umfasst mindestens einen zweiten Warmwasserspeicher mit mindestens einer elektrisch betreibbaren Heizeinrichtung, eingerichtet zum Erwärmen des in dem zweiten Warmwasserspeicher befindlichen Wassers. Die Energie-zu-Wärme Anordnung umfasst mindestens eine erste in einer ersten Rückleitung zwischen einem ersten Warmwasserspeicher und einer Heizvorrichtung des Heizsystems angeordnete Ventileinrichtung, eingerichtet zum Leiten von Wasser aus der ersten Rückleitung über mindestens eine zweite Hinleitung in den zweiten Warmwasserspeicher. Die Energie-zu-Wärme Anordnung umfasst mindestens eine zweite mit dem zweiten Warmwasserspeicher verbundene Rückleitung, eingerichtet zum Leiten von Wasser aus dem zweiten Warmwasserspeicher zu der Heizvorrichtung des Heizsystems.

Die Merkmale der Heizsysteme, Verfahren und Energie-zu-Wärme Anordnungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Heizsystem, das anmeldungsgemäße Verfahren sowie die anmeldungsgemäße Energie-zu-Wärme Anordnung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Heizungssystems gemäß dem Stand der Technik,
- Fig. 2: eine schematische Ansicht eines Ausführungsbeispiels eines Heizsystems gemäß der vorliegenden Anmeldung,
- Fig. 3: eine schematische Ansicht eines weiteren Ausführungsbeispiels eines Heizsystems gemäß der vorliegenden Anmeldung, und
- Fig. 4: ein Diagramm eines Ausführungsbeispiels eines Verfahrens gemäß der vorliegenden Anmeldung.

Nachfolgend werden für gleiche Elemente gleiche Bezugszeichen verwendet.

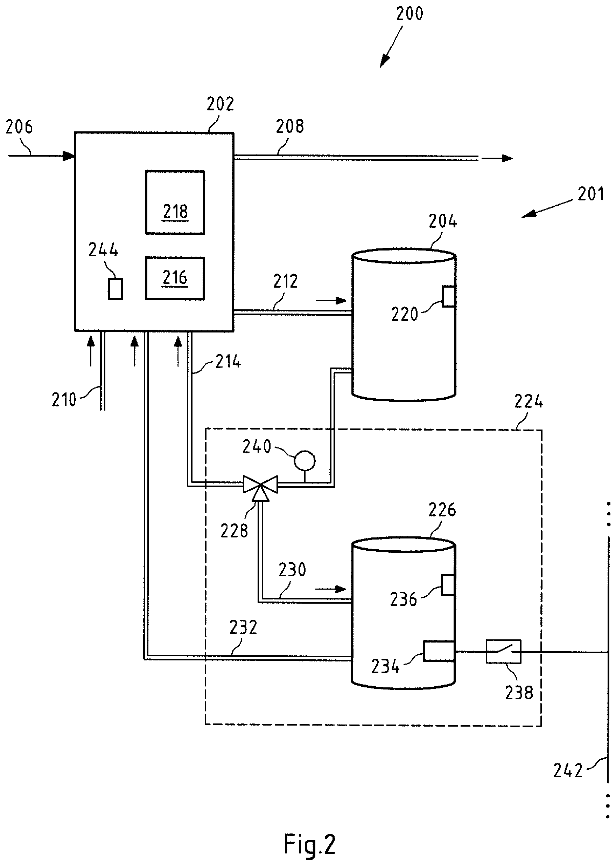

Die Figur 2 zeigt eine schematische Ansicht eines Ausführungsbeispiels eines Heizsystems 200 gemäß der vorliegenden Anmeldung. Das dargestellte Heizsystem 200 umfasst mindestens ein Heizungssystem 201 und mindestens eine Energie-zu-Wärme Anordnung 224.

Das Heizungssystem 201 umfasst eine Heizvorrichtung 202 und einen über ein Rohrleitungssystem 212, 214, insbesondere eine erste Hinleitung 212 und ein erste Rückleitung 214, mit der Heizvorrichtung 202 fluidisch verbundenen ersten Warmwasserspeicher 204. Die Heizvorrichtung 202 weist mindestens eine Pumpe 216 zum Fördern von Wasser und mindestens eine Brenneinrichtung 218 bzw. einen Brenner 218 zum Erwärmen von Wasser auf. Über einen Eingang 206 wird der Brenner 218 mit einem geeigneten Brennstoff (z.B. Gas, Öl etc.) versorgt.

Zudem verfügt das Heizungssystem 201 über mindestens eine dritte Hinleitung 208 zum Leiten von erwärmtem Wasser zu mindestens einer (nicht gezeigten) Heizeinheit, wie einem Heizkörper, und eine dritte Rückleitung 210 zum Erhalten des (erkalteten) Wassers von der mindestens einen Heizeinheit.

Der als Trinkwasserspeicher gebildete erste Warmwasserspeicher 204 dient dazu, einem Nutzer eines Gebäudes Warmwasser über mindestens eine Entnahmeeinrichtung (z.B. Armatur) zur Verfügung zu stellen. Ein (nicht gezeigtes) Rohleitungssystem kann hierzu an dem Warmwasserspeicher 204 angeschlossen sein.

Die Wassertemperatur des in dem Warmwasserspeicher 204 gespeicherten Wassers wird durch eine Temperaturmesseinrichtung 220 gemessen und mit einer vorgegebenen minimal zulässigen Temperatur verglichen. Wird ein Erreichen oder Unterschreiten der minimal zulässigen Temperatur detektiert, so wird die Heizvorrichtung 202 z.B. in einen zweiten Betriebsmodus gesetzt. Hierzu wird insbesondere eine (nicht gezeigte) Ventileinrichtung in der Heizvorrichtung 202 derart eingestellt, dass Wasser aus der Rückleitung 214 (und/oder 232) (und nicht 210) zu dem Brenner 218 geleitet und durch die Pumpe 216 in die Hinleitung 212 (und nicht 108) geleitet wird. Insbesondere kann in diesem Betriebsmodus das erhaltene Wasser durch den Brenner 218 erwärmt werden (sofern es unterhalb einer vorgegebenen Wassersolltemperatur liegt). Das erwärmte Wasser wird mittels der Pumpe 216 in den ersten Warmwasserspeicher 204 geleitet bzw. befördert.

Die Energie-zu-Wärme Anordnung 224 umfasst mindestens einen zweiten Warmwasserspeicher 226. Der zweite Warmwasserspeicher 226 weist mindestens eine elektrisch betreibbare Heizeinrichtung 234 auf. Wie zu erkennen ist, ist die elektrisch betreibbare Heizeinrichtung 234 insbesondere in dem zweiten Warmwasserspeicher 226 integriert. Beispielsweise kann die elektrisch betreibbare Heizeinrichtung 234 mindestens einen Heizstab umfassen, durch den ein Strom fließen kann, um das umgebende Wasser zu erwärmen.

Die elektrisch betreibbare Heizeinrichtung 234 ist vorliegend über eine Schalt- bzw. Steuereinheit 238 mit einem (öffentlichen) Stromnetz 242 verbunden. Insbesondere kann die Heizeinrichtung 234 durch das Stromnetz 242 mit elektrischer Leistung versorgt werden.

Die elektrisch betreibbare Heizeinrichtung 234 kann insbesondere aktiviert werden, wenn eine Überlast des Stromnetzes 242 in Form von überschüssiger elektrischer Energie in dem Stromnetz 242 detektiert wird. Hierbei kann die elektrisch betreibbare Heizeinrichtung 234 nur dann aktiviert werden, wenn der zweite Warmwasserspeicher 226 die maximal zulässige Wärmekapazitätsgrenze noch nicht erreicht hat (also noch Wärmeenergie aufnehmen kann), und/oder nur so lange aktiviert bleiben, bis der zweite Warmwasserspeicher 226 die maximal zulässige Wärmekapazitätsgrenze erreicht hat.

Ferner ist in dem zweiten Warmwasserspeicher 226 mindestens eine zweite Temperaturmesseinrichtung 236 integriert. Die zweite Temperaturmesseinrichtung 236 kann auch an einer anderen Position angeordnet und zum Messen der zweiten Wassertemperatur des in dem Warmwasserspeicher 226 befindlichen Wassers eingerichtet sein.

Darüber hinaus umfasst die Energie-zu-Wärme Anordnung 224 eine erste Ventileinrichtung 228, vorliegend in Form eines Drei-Wege Ventils 228. Es versteht sich, dass gemäß anderen Varianten der Anmeldung auch andere Ventileinrichtungen vorgesehen sein können. Die erste Ventileinrichtung 228 dient insbesondere der fluidischen Kopplung der Energie-zu-Wärme Anordnung 224 mit dem Heizungssystem 201.

Wie zu erkennen ist, ist die erste Ventileinrichtung 228 in dem ersten Rückleiter 214 angeordnet. An einen Ausgang der ersten Ventilanordnung 228 ist eine zweite Hinleitung 230 angeschlossen, dessen weiteres Ende mit dem zweiten Warmwasserspeicher 226 verbunden ist.

Die erste Ventileinrichtung 228 kann insbesondere in zumindest zwei unterschiedlichen Ventileinrichtungsstellungen, vorliegend Ventilstellungen, betrieben werden. In einer ersten Ventilstellung wird Wasser von dem ersten Warmwasserspeicher 204 über die Rückleitung 214, insbesondere dem ersten Teil der Rückleitung 214, über die erste Ventileinrichtung 228 und über die zweite Hinleitung 230 in den zweiten Warmwasserspeicher 226 befördert. In der zweiten Ventilstellung wird Wasser von dem ersten Warmwasserspeicher 204 über die Rückleitung 214, insbesondere dem ersten Teil der Rückleitung 214, über die erste Ventileinrichtung 228 und über die Rückleitung 214, insbesondere den zweiten Teil der Rückleitung, zu der Heizvorrichtung 202 befördert. Hierbei ist der erste Teil der ersten Rückleitung 214 durch die erste Ventilvorrichtung 228 von dem zweiten Teil der Rückleitung 214 getrennt.

Der zweite Warmwasserspeicher 226 ist ferner fluidisch mit der Heizvorrichtung 202 über mindestens eine zweite Rückleitung 232 gekoppelt. Bei anderen (bevorzugten) Varianten der Anmeldung kann die zweite Rückleitung, z.B. über eine weitere Ventileinrichtung, mit vorzugsweise einer bereits vorhandenen Rückleitung 214, 210 des Heizungssystems 201 fluidisch gekoppelt sein.

Ferner ist eine erste Temperaturmesseinrichtung 240 angeordnet. Die erste Temperaturmesseinrichtung 240 ist zum Messen des durch die Rückleitung 214 geleiteten bzw. strömenden Wassers eingerichtet. Die erste Temperaturmesseinrichtung 240 ist insbesondere an dem ersten Teil der Rückleitung 214 angeordnet, um, in Strömungsrichtung gesehen, die erste Wassertemperatur vor der ersten Ventileinrichtung 228 zu messen.

Die Heizvorrichtung 202 weist vorliegend eine vierte Temperaturmesseinrichtung 244 auf. Die vierte Temperaturmesseinrichtung 244 ist zum Messen einer vierten Wassertemperatur des in die Heizvorrichtung 202 rückgespeisten bzw. rückgeleiteten Wassers eingerichtet. Insbesondere kann der mindestens eine Brenner 218 abhängig von der gemessenen vierten Wassertemperatur und einer Wassersolltemperatur betrieben werden. Insbesondere kann die vierte Wassertemperatur mit der Wassersolltemperatur verglichen werden und die Brenneinrichtung 218 abhängig von der bestimmten Temperaturdifferenz betrieben werden. Insbesondere kann vorgesehen sein, dass bei Detektion einer Temperaturdifferenz von nahezu null (oder bei einer vierten Wassertemperatur, die größer als die Wassersolltemperatur ist), die Brenneinrichtung 218 nicht aktiviert wird.

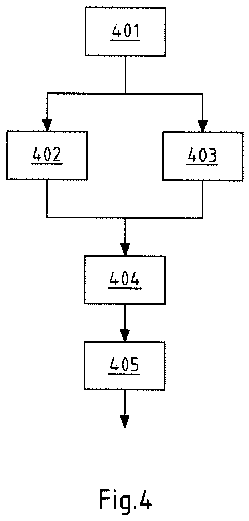

Die Figur 4 zeigt ein Diagramm eines Verfahrens gemäß der vorliegenden Anmeldung Mit dem Verfahren kann beispielsweise das in Figur 2 dargestellte Heizsystem 200 betrieben werden. Nachfolgend wird die Funktionsweise des Heizsystems 200 nachfolgend mit Hilfe der Figuren 2 und 4 näher beschrieben.

In einem ersten Schritt 401 kann zunächst eine fünfte Wassertemperatur in dem ersten Warmwasserspeicher 204 gemessen und insbesondere mit einer minimal zulässigen (bzw. gewünschten) minimalen Temperatur verglichen werden. Wird in dem Vergleich detektiert, dass die gemessene fünfte Wassertemperatur (im Wesentlichen) der vorgebbaren minimal zulässigen Temperatur entspricht, indiziert dies, dass das Wasser in dem ersten Warmwasserspeicher 204 (bis zu einer vorgebbaren Solltemperatur) zu erwärmen ist.

Beispielsweise wird das Heizungssystem 201 bzw. die Heizvorrichtung 202 in den zweiten Betriebsmodus gesetzt. Vorzugsweise kann die mindestens eine Pumpe 216 aktiviert und insbesondere betrieben werden, um das Wasser durch die erste Hinleitung 212, den ersten Warmwasserspeicher 204 und der ersten Rückleitung 214 (und ggf. durch die zweite Hin- und Rückleitung 230, 232 und den zweiten Warmwasserspeicher 226) zu fördern.

In den Schritten 402 und 403, vorzugsweise nahezu parallel, wird (zumindest nach Einstellung des zweiten Betriebsmodus) die erste Wassertemperatur des durch die Rückleitung 214 strömenden Wassers gemessen (Schritt 402) und die zweite Wassertemperatur des in dem zweiten Warmwasserspeichers 226 befindlichen Wassers gemessen (Schritt 403). Die Schritte 402 und 403 können vorzugsweise (nahezu) kontinuierlich durchgeführt werden.

Die gemessenen ersten und zweiten Wassertemperaturen werden in dem Schritt 404 ausgewertet. Der Schritt 404 kann vorzugsweise (nahezu) kontinuierlich mit den jeweils augenblicklich gemessenen ersten und zweiten Wassertemperaturen durchgeführt werden. Der Auswertevorgang kann eine Vergleichsoperation der gemessenen ersten und zweiten Wassertemperaturen umfassen.

In Schritt 405 wird die erste Ventileinrichtung 228 abhängig von der gemessenen ersten Wassertemperatur und der gemessenen zweiten Wassertemperatur, insbesondere von dem (kontinuierlich bereitstellbaren) Auswerteergebnis, gesteuert. Beispielsweise kann eine entsprechende (nicht gezeigte) Steuereinrichtung vorgesehen sein.

Vorzugsweise kann in Schritt 405 vorgesehen sein, dass die erste Ventileinrichtung 228 derart angesteuert wird, dass sie in der ersten Ventileinrichtungsstellung betrieben wird, wenn (und insbesondere solange wie) die erste Wassertemperatur geringer ist als die zweite Wassertemperatur. Zudem kann in Schritt 405 vorgesehen sein, dass die erste Ventileinrichtung 228 derart angesteuert wird, dass sie in der zweiten Ventileinrichtungsstellung betrieben wird, wenn die erste Wassertemperatur gleich oder höher ist als die zweite Wassertemperatur. Während in der ersten Ventilstellung vorgewärmtes Wasser von dem zweiten Warmwasserspeicher 226 zu der Heizvorrichtung 202 und dann in den ersten Warmwasserspeicher 204 gefördert wird, wird in der zweiten Ventilstellung das Wasser unmittelbar (in herkömmlicher Weise) von dem ersten Warmwasserspeicher 204 zu der Heizvorrichtung 202 und dann in den ersten Warmwasserspeicher 204 gefördert.

Durch ein entsprechendes Betreiben des Heizsystems 200 kann der Energieverbrauch der Heizvorrichtung 202 reduziert werden.

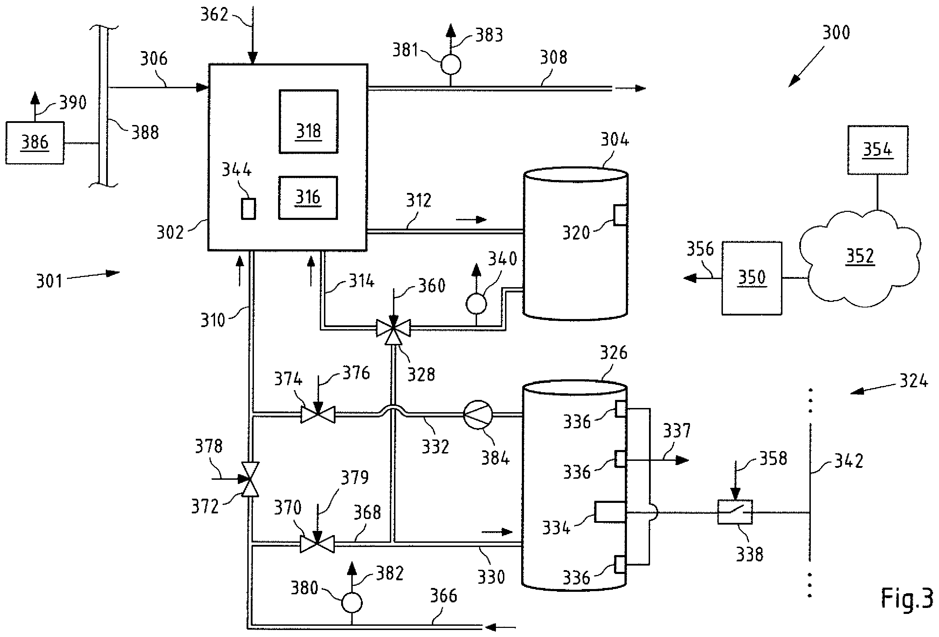

Die Figur 3 zeigt eine schematische Ansicht eines weiteren Ausführungsbeispiels eines Heizsystems 300 gemäß der vorliegenden Anmeldung. Zur Vermeidung von Wiederholungen werden nachfolgend im Wesentlichen nur die Unterschiede zu dem Ausführungsbeispiel nach Figur 2 beschrieben und ansonsten auf die obigen Ausführungen zu der Figur 2 verwiesen.

Das Heizungssystem 301 umfasst vorliegend eine gasbetriebene Heizvorrichtung 302. Die gasbetriebene Heizvorrichtung 302 ist über einen Gaseingang 306 mit einem (öffentlichen) Gasleitungsnetz 388 gekoppelt. Über den Gaseingang 306 kann die Heizvorrichtung 302, insbesondere die Gasbrenneinrichtung 318, mit Gas (z.B. Erdgas) versorgt und betrieben werden.

Zur Überwachung des Gasleitungsnetzes 388 ist vorliegend eine weitere Zustandserfassungseinrichtung 386 angeordnet. Die weitere Zustandserfassungseinrichtung 386 kann zum Erfassen eines Gasmangels in dem Gasleitungsnetz 388 als Gasleitungsnetzzustand eingerichtet sein. Die weitere Zustandserfassungseinrichtung 386 kann vorzugsweise mindestens eine (nicht gezeigte) Messeinrichtung umfassen, eingerichtet zum Messen eines Gasdrucks in dem Gasleitungsnetz 388, an dem die Heizvorrichtung 302 angeschlossen ist.

Basierend auf dem gemessenen Gasdruck und einem vorgegebenen minimalen Sollgasdruck kann die Zustandserfassungseinrichtung 386 den (augenblicklichen) Gasleitungsnetzzustand bestimmen und zumindest bei einem detektierten Gasmangel (z.B. Gasdruck gleich oder kleiner dem minimalen Sollgasdruck) dies über einen Kommunikationsausgang 390 z.B. einer zentralen Steuereinrichtung 354 übermitteln.

Die zentrale Steuereinrichtung 354 kann eine Recheneinrichtung 354 in Form mindestens eines Servers 354 sein. Die zentrale Steuereinrichtung 354 kann zum Steuern einer Mehrzahl von Heizsystemen 300 eingerichtet sein. Hierzu kann die zentrale Steuereinrichtung 354 über ein Kommunikationsnetz 352 (z.B. Internet 352) mit einer lokalen Steuereinrichtung 350 (z.B. eine lokale Gebäudesteuerung 350) eines Heizsystems 300 (z.B. ein Hausautomationscontroller) verbunden sein.

Bei Detektion eines Gasmangels und/oder bei Detektion einer zuvor beschriebenen Überlast des Stromnetzes 342 kann insbesondere die zentrale Steuereinrichtung 354 die lokale Steuereinrichtung 350 ansteuern, um bei einer vorliegenden Flexibilität des zweiten Warmwasserspeichers 326 diese Flexibilität zu nutzen. Dann kann die Steuereinrichtung 350 über ein (nicht gezeigtes) drahtloses und/oder drahtgebundenes (lokales) Kommunikationsnetz die Steuereinheit 338 ansteuern. Die lokale Steuereinrichtung 350 kann hierfür über eine Kommunikationsschnittstelle 356 verfügen. Auch die Steuer- bzw. Schalteinheit 338 weist eine Kommunikationsschnittstelle 358 auf.

Durch die Ansteuerung kann eine Aktivierung und insbesondere die Einstellung einer bestimmten Leistungsstufe der elektrisch betreibbaren Heizeinrichtung 334 bewirkt werden. In entsprechender Weise und/oder bei Erreichen der Kapazitätsgrenze kann die elektrisch betreibbare Heizeinrichtung 334 wieder deaktiviert werden.

Die zentrale (oder lokale) Steuereinrichtung 354 kann Netzsituationen im Stromnetz 342, insbesondere einem Niederspannungsnetz 342, und im Gasleitungsnetz 388 analysieren und prognostizieren. Bei Erreichen von oben genannten Grenzwerten kann die Steuereinrichtung 354 zumindest ein Ein- oder Ausschalten der elektrisch betreibbaren Heizeinrichtung 334 (für einen zukünftigen Zeitraum) bewirken. Sollte die Netzsituationen nicht kritisch sein, so kann die freie Flexibilität bei anderen Varianten der Anmeldung auch vermarktet werden.

Auch kann das Heizsystem bei anderen Varianten autark, ohne zentrale Steuereinrichtung 354, arbeiten. Beispielsweise über eine eingebaute Speicher Programmierbare Steuerung (SPS) kann das Heizsystem 300 autark arbeiten. Sobald der zweite Warmwasserspeicher 326 eine (vor-)definierte Wärmemenge aufnehmen kann, schaltet sich der Heizstab 334 automatisch ein.

Das Heizsystem ist insbesondere in einem Gebäude, vorzugsweise in einem Privathaushalt oder einem kleineren gewerblichen Betrieb, installiert. Das Gebäude kann über einen Schaltschrank verfügen. In dem Schaltschrank können alle gemessenen Informationen des Heizsystems zusammenlaufen. Hier ist beispielsweise eine Strommessung verbaut, die den tatsachlichen Gesamtverbrauch der Energie-zu-Wärme Anordnung ermittelt. Des Weiteren kann hier die lokale Steuereinrichtung, wie eine Fernwirkeinheit, verbaut sein, die die Kommunikation mit der zentralen Steuereinrichtung 354 ermöglicht.

Vorliegend umfasst der zweite Warmwasserspeicher 326 eine Mehrzahl von zweiten Temperaturmesseinrichtungen 336. Durch die Mehrzahl von zweiten Temperaturmesseinrichtungen 336 (z.B. in Form von Einschraubfühlern 336) kann die augenblicklich gespeicherte Wärmemenge bzw. -energie mit einer hohen Genauigkeit bestimmt werden.

Aus der maximal durch den zweiten Warmwasserspeicher 326 aufnehmbaren Wärmemenge und der augenblicklich gespeicherten Wärmemenge kann die maximal noch aufnehmbare Wärmemenge bzw. die entsprechende elektrische Energie bestimmt werden. Diese Flexibilität kann beispielsweise über eine Kommunikationsschnittstelle 337 an die lokale und/oder zentrale Steuereinrichtung 350, 354 übertragen werden. Die verfügbare Flexibilität kann bei der Ansteuerung der elektrisch betreibbaren Heizeinrichtung 334 berücksichtigt werden.

Ferner kann der Figur 3 entnommen werden, dass optional eine Pumpe 384 in der zweiten Rückleitung 332 zum Unterstützen des Förderns des Wassers angeordnet sein kann. Die Pumpe 384 kann insbesondere Druckverluste in Folge der zusätzlichen Energie-zu-Wärme Anordnung 324 ausgleichen. Sie kann insbesondere nur dann angesteuert werden, wenn ein (nicht gezeigter) Durchflusssensor in der Rückleitung 332 einen Durchfluss detektiert.

Ferner ist in der zweiten Rückleitung 332 ein über eine Kommunikationsschnittstelle 376 ansteuerbares optionales Ventil 374 angeordnet. Dieses kann immer dann geöffnet sein, wenn Wasser aus dem zweiten Warmwasserspeicher gefördert werden soll.

Über eine dritte Hinleitung 308 kann eine (nicht gezeigte) Heizeinheit (z.B. Fußbodenheizung, Heizungskörper etc.) mit erwärmtem Wasser von der Heizvorrichtung 302 versorgt werden. Über die dritte Rückleitung 310, 366 kann Wasser von der mindestens einen Heizeinheit zu der Heizvorrichtung 302 gefördert bzw. transportiert werden.

Vorliegend ist in der dritten Rückleitung 310, 366 eine zweite Ventileinrichtung 370, 372 in Form von zwei über jeweils eine Kommunikationsschnittstelle 378, 379 ansteuerbaren Ventilen 370, 372 angeordnet. Die zweite Ventileinrichtung 370, 372 ist insbesondere zum Leiten von Wasser aus der dritten Rückleitung 310, 366 über mindestens eine vierte Hinleitung 368, 330 (die vorliegend teilweise aus der zweiten Hinleitung 330 gebildet ist) in den zweiten Warmwasserspeicher 326 eingerichtet. Hierzu kann, entsprechend einer ersten Ventileinrichtungsstellung der zweiten Ventileinrichtung 370, 372, insbesondere das Ventil 372 gesperrt und das Ventil 370 geöffnet sein. In einer zweiten Ventileinrichtungsstellung der zweiten Ventileinrichtung 370, 372 kann das Ventil 370 gesperrt und das Ventil 372 geöffnet sein. In dieser zweiten Ventileinrichtungsstellung wird ein unmittelbarer Wasserfluss zu der Heizvorrichtung 302 ermöglicht.

Die Energie-zu-Wärme Anordnung 324 umfasst vorliegend mindestens eine dritte Temperaturmesseinrichtung 380, eingerichtet zum Messen einer dritten Wassertemperatur des durch die dritte Rückleitung 210, 310, 366 geleiteten Wassers. Die mindestens eine Steuereinrichtung 350 kann zum Steuern der mindestens einen zweiten Ventileinrichtung 370, 372 abhängig von der gemessenen dritten Wassertemperatur und der gemessenen zweiten Wassertemperatur eingerichtet sein. Wenn die dritte Wassertemperatur gleich oder größer als die zweite Wassertemperatur ist, kann insbesondere die zweite Ventileinrichtungsstellung eingestellt werden und, wenn die dritte Wassertemperatur zumindest geringer als die zweite Wassertemperatur ist, kann insbesondere die erste Ventileinrichtungsstellung eingestellt werden. Es versteht sich, dass unter der zweiten Wassertemperatur die minimale zweite Wassertemperatur oder eine mittlere zweite Wassertemperatur zu verstehen ist.

Es versteht sich, dass ferner als Sicherheitsmaßnahmen Rückschlagventile, Membranausdehnungsgefäße oder dergleichen, Handabsperrventile, Entleerungshähne, Sicherheitsablassventile etc. in dem Heizsystem angeordnet sein können.

Anmeldungsgemäß kann in den Rücklaufleitungen der Heizungsanlage ein zusätzlicher (zweiter) Warmwasserspeicher (auch P2H-Speicher genannt) eingebaut sein. Durch die zweite Ventileinrichtung in der dritten Rücklaufleitung des Heizungssystems bzw. der Heizungsanlage kann das Wasser des Heizungssystems über den P2H-Speicher permanent zur Heizvorrichtung bzw. zum Wärmeerzeuger geführt werden. In dem P2H-Speicher befindet sich insbesondere ein Heizstab. Zusätzlich können in verschiedene Schichten des P2H-Speichers die vorhandenen Temperaturen gemessen werden.

In einem beladenen Zustand des P2H-Speichers kann eine Rucklauftemperaturanhebung bis zur maximalen Vorlauftemperatur (bzw. zuvor beschriebene Wassersolltemperatur) der Heizvorrichtung bereitgestellt werden. Insbesondere kann der zweite Warmwasserspeicher entsprechend auf die Heizvorrichtung abgestimmt sein. Der Wärmeerzeuger kann automatisch die höhere Rücklauftemperatur detektieren und kann insbesondere den Heiz- bzw. Brennvorgang abschalten. Dies kann zur Einsparung von Primärenergie führen.

Um insbesondere eine jahreszeitenunabhängige und/oder außentemperaturunabhängige Abnahme der zusätzlich eingebrachten Wärme zu garantieren, kann der erste Warmwasserspeicher bzw. der Trinkwasserspeicher an die Energie-zu-Wärme Anordnung angeschlossen sein. Insbesondere kann ein Dreiwegeventil in Verbindung mit der Temperaturmessung in der ersten Rücklaufleitung des Trinkwasserspeichers sowie die oberste Temperaturmessung in dem P2H-Speicher verwendet werden. Wird in der Rücklaufleitung des Trinkwasserspeichers eine niedrigere Temperatur detektiert als im P2H-Speicher, kann sich das Dreiwegeventil automatisch einschalten und den Weg über den P2H Speicher frei machen und den Weg zum Wärmeerzeuger sperren. Als Resultat kann das Trinkwasser vorgewärmt zum Wärmeerzeuger gefördert werden, was zur Einsparungen von Primärenergie führt.

Das anmeldungsgemäße System weist insbesondere folgende Vorteile auf:
- Brennstoff unabhängig
- Frei Skalierbar
- Jahreszeitenunabhängig
- Nahezu universell einsetzbar
- Nachrüstbar
- Vermarktungsfähig

Hierbei zeichnet sich die Anmeldung insbesondere dadurch aus, dass Warmwasser ganzjährig benötigt wird, so dass die Abnahme der durch überschüssigen Strom erzeugten Wärme garantiert werden kann.

Zudem kann als wesentlicher Unterschied zum Stand der Technik die Kopplung zum Gasleitungsnetz genannt werden. Neben der Analysierung und Prognostizierung der Stromnetzsituation kann insbesondere parallel auch das Gasnetz analysiert und prognostiziert werden.

Schließlich ist von Vorteil, dass ein Nutzer von dem Umschalten der Ventileinrichtungen nichts mitbekommt, da weiterhin die geforderten Temperaturen im Heizungssystem vorhanden sind. Dies bedeutet keinen Qualitätsverlust für den Nutzer.

## Patentansprüche

1. Energie-zu-Wärme Anordnung (224, 324) für ein Heizungssystem (201, 301) mit mindestens einer ölbetriebenen oder gasbetriebenen Heizvorrichtung (202, 302) und mindestens einem ersten Warmwasserspeicher (204, 304), umfassend:
- mindestens einen zweiten Warmwasserspeicher (226, 326) mit mindestens einer elektrisch betreibbaren Heizeinrichtung (234, 334), eingerichtet zum Erwärmen des in dem zweiten Warmwasserspeicher (226, 326) befindlichen Wassers,
- mindestens eine erste Ventileinrichtung (228, 328) angeordnet in einer ersten Rückleitung (214, 314) zur Anordnung zwischen dem ersten Warmwasserspeicher (204, 304) und der Heizvorrichtung (202, 302) des Heizungssystems (201, 301) eingerichtet zum Leiten von Wasser aus der ersten Rückleitung (214, 314) über mindestens eine zweite Hinleitung (230, 330) in den zweiten Warmwasserspeicher (226, 326), **gekennzeichnet durch**
- mindestens eine zweite mit dem zweiten Warmwasserspeicher (226, 326) verbundene Rückleitung (214, 314), eingerichtet zum Leiten von Wasser aus dem zweiten Warmwasserspeicher (226, 326) zu der Heizvorrichtung (202, 302) des Heizungssystems (201, 301), wobei der zweite Warmwasserspeicher (226, 326) über die zweite Rückleitung (214, 314) fluidisch mit der Heizvorrichtung (202, 302) gekoppelt ist.

2. Heizsystem (200, 300) für ein Gebäude, umfassend:
- mindestens eine ölbetriebene oder gasbetriebene Heizvorrichtung (202, 302), eingerichtet zum Erwärmen von Wasser, welches der Heizvorrichtung (202, 302) zuleitbar ist, und
- mindestens einen ersten Warmwasserspeicher (204, 304),
- wobei der erste Warmwasserspeicher (204, 304) mit der Heizvorrichtung (202, 302) über mindestens eine erste Hinleitung (212, 312) zum Hinleiten von erwärmtem Wasser zu dem ersten Warmwasserspeicher (204, 304) und über mindestens eine erste Rückleitung (214, 314) zum Rückleiten von Wasser zu der Heizvorrichtung (202, 302) verbunden ist,
**dadurch gekennzeichnet, dass** das Heizsystem (200, 300) mindestens eine Energie-zu-Wärme Anordnung (224, 324) nach Anspruch 1 umfasst.

3. Heizsystem (200, 300) nach Anspruch 2, **dadurch gekennzeichnet, dass** die Energie-zu-Wärme Anordnung (224, 324) umfasst:
- mindestens eine erste Temperaturmesseinrichtung (240, 340), eingerichtet zum Messen einer ersten Wassertemperatur des durch die erste Rückleitung (214, 314) geleiteten Wassers,
- mindestens eine zweite Temperturmesseinrichtung (236, 336), eingerichtet zum Messen einer zweiten Wassertemperatur des in dem zweiten Warmwasserspeicher (226, 326) befindlichen Wassers, und
- mindestens eine Steuereinrichtung (350), eingerichtet zum Steuern der ersten Ventileinrichtung (228, 328) abhängig von der gemessenen ersten Wassertemperatur und der gemessenen zweiten Wassertemperatur.

4. Heizsystem (200, 300) nach Anspruch 3, **dadurch gekennzeichnet, dass**
- die erste Ventileinrichtung (228, 328) in einer ersten Ventileinrichtungsstellung zum Leiten von Wasser aus der ersten Rückleitung (214, 314) über die zweite Hinleitung (230, 330) in den zweiten Warmwasserspeicher (226, 326) eingerichtet ist, und
- die erste Ventileinrichtung (228, 328) in einer zweiten Ventileinrichtungsstellung zum Leiten des Wassers von dem ersten Warmwasserspeicher (204, 304) zu der Heizvorrichtung (202, 302) über die erste Rückleitung (214, 314) eingerichtet ist,
- wobei die erste Ventileinrichtung (228, 328) derart ansteuerbar ist, dass sie in der ersten Ventileinrichtungsstellung betrieben wird, wenn die erste Wassertemperatur geringer ist als die zweite Wassertemperatur, und/oder
- wobei die erste Ventileinrichtung (228, 328) derart ansteuerbar ist, dass sie in der zweiten Ventileinrichtungsstellung betrieben wird, wenn die erste Wassertemperatur gleich oder höher ist als die zweite Wassertemperatur.

5. Heizsystem (200, 300) nach Anspruch 2, **dadurch gekennzeichnet, dass** die elektrisch betreibbare Heizeinrichtung (234, 334) abhängig von einem Stromnetzzustand eines mit der elektrisch betreibbaren Heizeinrichtung (234, 334) verbindbaren Stromnetzes (242, 342) steuerbar ist.

6. Heizsystem (200, 300) nach einem der vorherigen Ansprüche 2 oder 4 bis 5,
**dadurch gekennzeichnet, dass** die Energie-zu-Wärme Anordnung (224, 324) umfasst:
- mindestens eine zweite Temperturmesseinrichtung (236, 336), eingerichtet zum Messen mindestens einer zweiten Wassertemperatur des in dem zweiten Warmwasserspeicher (226, 326) befindlichen Wassers,
- wobei die elektrisch betreibbare Heizeinrichtung (234, 334) abhängig von der mindestens einen zweiten Wassertemperatur und einer maximal zulässigen Wassertemperatur des in dem zweiten Warmwasserspeicher (226, 326) befindlichen Wassers steuerbar ist.

7. Heizsystem (200, 300) nach einem der vorherigen Ansprüche 2 bis 6, **dadurch gekennzeichnet, dass**
- die Heizvorrichtung (202, 302) eine gasbetriebene Heizvorrichtung (202, 302) ist,
- wobei die gasbetriebene Heizvorrichtung (202, 302) mindestens einen mit einem Gasleitungsnetz (388) verbindbaren Gaseingang (206, 306) aufweist, und
- die elektrisch betreibbare Heizeinrichtung (234, 334) abhängig von mindestens einem Gasleitungsnetzzustand des Gasleitungsnetzes (388) steuerbar ist.

8. Heizsystem (200, 300) nach einem der vorherigen Ansprüche 2 bis 7, **dadurch gekennzeichnet, dass** die Energie-zu-Wärme Anordnung (224, 324) umfasst:
- mindestens eine dritte mit der Heizvorrichtung (202, 302) verbundene Hinleitung (208, 308), eingerichtet zum Leiten von erwärmtem Wasser zu mindestens einer Heizeinheit des Gebäudes,
- mindestens eine dritte mit der Heizvorrichtung (202, 302) verbundene Rückleitung (210, 310, 366), eingerichtet zum Leiten von Wasser von der Heizeinheit des Gebäudes zu der Heizvorrichtung (202, 302), und
- mindestens eine zweite in der dritten Rückleitung (210, 310, 366) angeordnete Ventileinrichtung (370, 372), eingerichtet zum Leiten von Wasser aus der dritten Rückleitung (210, 310, 366) über mindestens eine vierte Hinleitung (368, 330) in den zweiten Warmwasserspeicher (226, 326).

9. Heizsystem (200, 300) nach Anspruch 8 und einem der Ansprüche 2 oder 4, 5, 7, **dadurch gekennzeichnet, dass** die Energie-zu-Wärme Anordnung (224, 324) umfasst:
- mindestens eine dritte Temperaturmesseinrichtung (380), eingerichtet zum Messen einer dritten Wassertemperatur des durch die dritte Rückleitung (210, 310, 366) geleiteten Wassers,
- mindestens eine zweite Temperturmesseinrichtung (236, 336), eingerichtet zum Messen einer zweiten Wassertemperatur des in dem zweiten Warmwasserspeicher (226, 326) befindlichen Wassers, und
- mindestens eine Steuereinrichtung (350), eingerichtet zum Steuern der mindestens einen zweiten Ventileinrichtung (370, 372) abhängig von der gemessenen dritten Wassertemperatur und der gemessenen zweiten Wassertemperatur.

10. Verfahren zum Betreiben eines Heizsystems (200, 300) nach einem der vorherigen Ansprüche 2 bis 9, umfassend:
- Messen einer ersten Wassertemperatur des durch eine erste zwischen einem ersten Warmwasserspeicher (204, 304) und einer ölbetriebenen oder gasbetriebenen Heizvorrichtung (202, 302) des Heizsystems (200, 300) angeordnete Rückleitung (214, 314) geleiteten Wassers,
- Messen einer zweiten Wassertemperatur des in einem zweiten Warmwasserspeicher (226, 326) befindlichen Wassers,
- Steuern mindestens einer ersten in der Rückleitung (214, 314) angeordneten Ventileinrichtung (228, 328) abhängig von der gemessenen ersten Wassertemperatur und der gemessenen zweiten Wassertemperatur, derart, dass, wenn die erste Wassertemperatur geringer ist als die zweite Wassertemperatur, das Wasser aus der ersten Rückleitung (214, 314) über mindestens eine zweite Hinleitung (230, 330) in den zweiten Warmwasserspeicher (226, 326) geleitet wird, und
- Steuern der ersten Ventileinrichtung (228, 328) abhängig von der gemessenen ersten Wassertemperatur und der gemessenen zweiten Wassertemperatur, derart, dass wenn die erste Wassertemperatur gleich oder höher ist als die zweite Wassertemperatur, das Wasser durch die erste Rückleitung (214, 314) zu der Heizvorrichtung (202, 302) geleitet wird.

## Claims

1. An energy-to-heat arrangement (224, 324) for a heating system (201, 301) with at least one oil-fired or gas-fired heating device (202, 302) and at least one first hot water storage tank (204, 304), comprising:
- at least one second hot water storage tank (226, 326) with at least one electrically operated heating equipment (234, 334) configured to heat the water in the second hot water storage tank (226, 326),
- at least one first valve equipment (228, 328) arranged in a first return pipe (214, 314) for an arrangement between the first hot water storage tank (204, 304) and the heating device (202, 302) of the heating system (201, 301) configured to conduct water from the first return pipe (214, 314) via at least one second supply pipe (230, 330) into the second hot water storage tank (226, 326), **characterized by**
- at least one second return pipe (214, 314) connected to the second hot water storage tank (226, 326) and configured to conduct water from the second hot water storage tank (226, 326) to the heating device (202, 302) of the heating system (201, 301), wherein the second hot water storage tank (226, 326) is fluidically coupled to the heating device (202, 302) via the second return pipe (214, 314) .

2. A heating system (200, 300) for a building, comprising:
- at least one oil-fired or gas-fired heating device (202, 302) configured to heat water that can be supplied to the heating device (202, 302), and
- at least one first hot water storage tank (204, 304),
- wherein the first hot water storage tank (204, 304) is connected to the heating device (202, 302) via at least one first supply line (212, 312) for supplying heated water to the first hot water storage tank (204, 304) and via at least one first return pipe (214, 314) for returning water to the heating device (202, 302), **characterized in that** the heating system (200, 300) comprises at least one energy-to-heat arrangement (224, 324) according to claim 1.

3. The heating system (200, 300) according to claim 2, **characterized in that** the energy-to-heat arrangement (224, 324) comprises:
- at least one first temperature measuring equipment (240, 340) configured to measure a first water temperature of the water conducted through the first return pipe (214, 314),
- at least one second temperature measuring equipment (236, 336) configured to measure a second water temperature of the water located in the second hot water storage tank (226, 326), and
- at least one control equipment (350) configured to control the first valve equipment (228, 328) depending on the measured first water temperature and the measured second water temperature.

4. The heating system (200, 300) according to claim 3, **characterized in that**
- the first valve equipment (228, 328) is configured in a first valve equipment position to direct water from the first return pipe (214, 314) via the second supply pipe (230, 330) into the second hot water tank (226, 326), and
- the first valve equipment (228, 328) is configured in a second valve equipment position to conduct the water from the first hot water storage tank (204, 304) to the heating device (202, 302) via the first return pipe (214, 314),
- wherein the first valve equipment (228, 328) is controllable such that it is operated in the first valve equipment position if the first water temperature is lower than the second water temperature, and/or
- wherein the first valve equipment (228, 328) is controllable such that it is operated in the second valve equipment position if the first water temperature is equal to or higher than the second water temperature.

5. The heating system (200, 300) according to claim 2, **characterized in that** the electrically operable heating equipment (234, 334) is controllable depending on a power grid status of a power grid (242, 342) that is connectable to the electrically operable heating equipment (234, 334).

6. The heating system (200, 300) according to any of the preceding claims 2 or 4 to 5, **characterized in that** the energy-to-heat arrangement (224, 324) comprises:
- at least one second temperature measuring equipment (236, 336) configured to measure at least one second water temperature of the water located in the second hot water storage tank (226, 326),
- wherein the electrically operable heating device (234, 334) is controllable depending on the at least one second water temperature and a maximum permissible water temperature of the water located in the second hot water storage tank (226, 326).

7. The heating system (200, 300) according to one of the preceding claims 2 to 6, **characterized in that**
- the heating device (202, 302) is a gas-powered heating device (202, 302),
- wherein the gas-powered heating device (202, 302) comprises at least one gas inlet (206, 306) connectable to a gas pipeline network (388), and
- the electrically operable heating device (234, 334) is controllable depending on at least one gas pipeline network state of the gas pipeline network (388).

8. The heating system (200, 300) according to any of the preceding claims 2 to 7, **characterized in that** the energy-to-heat arrangement (224, 324) comprises:
- at least one third supply pipe (208, 308) connected to the heating device (202, 302), and configured to conduct heated water to at least one heating unit of the building,
- at least one third return pipe (210, 310, 366) connected to the heating device (202, 302) and configured to conduct water from the heating unit of the building to the heating device (202, 302), and
- at least one second valve equipment (370, 372) arranged in the third return pipe (210, 310, 366) and configured to conduct water from the third return pipe (210, 310, 366) via at least one fourth supply pipe (368, 330) into the second hot water storage tank (226, 326).

9. The heating system (200, 300) according to claim 8 and one of claims 2 or 4, 5, 7, **characterized in that** the energy-to-heat arrangement (224, 324) comprises:
- at least one third temperature measuring equipment (380) configured to measure a third water temperature of the water conducted through the third return pipe (210, 310, 366),
- at least one second temperature measuring equipment (236, 336) configured to measure a second water temperature of the water located in the second hot water storage tank (226, 326), and
- at least one control device (350) configured to control the at least one second valve equipment (370, 372) depending on the measured third water temperature and the measured second water temperature.

10. A method for operating a heating system (200, 300) according to one of the preceding claims 2 to 9, comprising:
- measuring a first water temperature of the water conducted through a first return pipe (214, 314) arranged between a first hot water storage tank (204, 304) and an oil-fired or gas-fired heating device (202, 302) of the heating system (200, 300);
- measuring a second water temperature of the water located in a second hot water storage tank (226, 326),
- controlling at least one first valve equipment (228, 328) arranged in the return pipe (214, 314) depending on the measured first water temperature and the measured second water temperature such that if the first water temperature is lower than the second water temperature, the water from the first return pipe (214, 314) is fed via at least one second supply pipe (230, 330) into the second hot water tank (226, 326), and
- controlling the first valve equipment (228, 328) depending on the measured first water temperature and the measured second water temperature such that if the first water temperature is equal to or higher than the second water temperature, the water is directed through the first return pipe (214, 314) to the heating device (202, 302).

## Revendications

1. Dispositif d'énergie en chaleur (224, 324) pour un système de chauffage (201, 301) comprenant au moins un dispositif de chauffage (202, 302) fonctionnant au fioul ou au gaz et au moins un premier réservoir d'eau chaude (204, 304), comprenant :
- au moins un deuxième réservoir d'eau chaude (226, 326) avec au moins un dispositif de chauffage électrique (234, 334) configuré pour chauffer l'eau se trouvant dans le deuxième réservoir d'eau chaude (226, 326),
- au moins un premier dispositif de soupape (228, 328) disposé dans une première conduite de retour (214, 314) entre le premier réservoir d'eau chaude (204, 304) et le dispositif de chauffage (202, 302) du système de chauffage (201, 301), configuré pour acheminer de l'eau de la première conduite de retour (214, 314) via au moins une deuxième conduite d'alimentation (230, 330) vers le deuxième réservoir d'eau chaude (226, 326), **caractérisé par**
- au moins une deuxième conduite de retour (214, 314) reliée au deuxième réservoir d'eau chaude (226, 326), configuré pour acheminer de l'eau du deuxième réservoir d'eau chaude (226, 326) vers le dispositif de chauffage (202, 302) du système de chauffage (201, 301), où le deuxième réservoir d'eau chaude (226, 326) est couplé de manière fluidique au dispositif de chauffage (202, 302) via la deuxième conduite de retour (214, 314).

2. Système de chauffage (200, 300) pour un bâtiment, comprenant :
- au moins un dispositif de chauffage (202, 302) fonctionnant au fioul ou au gaz, configuré pour chauffer de l'eau amenable au dispositif de chauffage (202, 302), et
- au moins un premier réservoir d'eau chaude (204, 304),
- où le premier réservoir d'eau chaude (204, 304) est relié au dispositif de chauffage (202, 302) par au moins une première conduite d'alimentation (212, 312) pour acheminer l'eau chauffée vers le premier réservoir d'eau chaude (204, 304) et par au moins une première conduite de retour (214, 314) pour renvoyer de l'eau vers le dispositif de chauffage (202, 302) ,
**caractérisé en ce que** le système de chauffage (200, 300) comprend au moins un dispositif de conversion d'énergie en chaleur (224, 324) selon la revendication 1.

3. Système de chauffage (200, 300) selon la revendication 2, **caractérisé en ce que** le dispositif de conversion d'énergie en chaleur (224, 324) comprend :
- au moins un premier dispositif de mesure de température (240, 340) configuré pour mesurer une première température d'eau de l'eau acheminée par la première conduite de retour (214, 314),
- au moins un deuxième dispositif de mesure de température (236, 336) configuré pour mesurer une deuxième température d'eau de l'eau se trouvant dans le deuxième réservoir d'eau chaude (226, 326), et
- au moins un dispositif de commande (350) configuré pour commander le premier dispositif de soupape (228, 328) en fonction de la première température d'eau mesurée et de la deuxième température d'eau mesurée.

4. Système de chauffage (200, 300) selon la revendication 3, **caractérisé en ce que**
- le premier dispositif de soupape (228, 328) est configuré, dans une première position de dispositif de soupape, pour acheminer de l'eau de la première conduite de retour (214, 314) vers le deuxième réservoir d'eau chaude (226, 326) via la deuxième conduite d'alimentation (230, 330), et
- le premier dispositif de soupape (228, 328) est configuré, dans une deuxième position de dispositif de soupape, pour acheminer de l'eau du premier réservoir d'eau chaude (204, 304) vers le dispositif de chauffage (202, 302) via la première conduite de retour (214, 314),
- le premier dispositif de soupape (228, 328) commandable de telle sorte qu'il fonctionne dans la première position de dispositif de soupape lorsque la première température de l'eau est inférieure à la deuxième température de l'eau, et/ou
- le premier dispositif de soupape (228, 328) est commandable de telle sorte qu'il fonctionne dans la deuxième position du dispositif de soupape lorsque la première température de l'eau est égale ou supérieure à la deuxième température de l'eau.

5. Système de chauffage (200, 300) selon la revendication 2, **caractérisé en ce que** le dispositif de chauffage électrique (234, 334) est commandable en fonction de un état de réseau électrique (242, 342) connectable au dispositif de chauffage électrique (234, 334).

6. Système de chauffage (200, 300) selon l'une des revendications 2 ou 4 à 5 précédentes, **caractérisé en ce que** le dispositif de conversion d'énergie en chaleur (224, 324) comprend :
- au moins un deuxième dispositif de mesure de température (236, 336) configuré pour mesurer au moins une deuxième température de l'eau se trouvant dans le deuxième réservoir d'eau chaude (226, 326),
- où le dispositif de chauffage électrique (234, 334) est commandable en fonction de l'au moins une deuxième température de l'eau et d'une température maximale admissible de l'eau se trouvant dans le deuxième réservoir d'eau chaude (226, 326).

7. Système de chauffage (200, 300) selon l'une des revendications 2 à 6 précédentes, **caractérisé en ce que**
- le dispositif de chauffage (202, 302) est un dispositif de chauffage à gaz (202, 302),
- où le dispositif de chauffage à gaz (202, 302) comporte au moins une entrée de gaz (206, 306) raccordable à un réseau de conduites de gaz (388), et
- le dispositif de chauffage électrique (234, 334) est commandable en fonction d'au moins un état du réseau de conduites de gaz (388).

8. Système de chauffage (200, 300) selon l'une des revendications 2 à 7 précédentes, **caractérisé en ce que** le dispositif de conversion d'énergie en chaleur (224, 324) comprend :
- au moins une troisième conduite d'alimentation (208, 308) reliée au dispositif de chauffage (202, 302), configuré pour acheminer de l'eau chauffée vers au moins une unité de chauffage du bâtiment,
- au moins une troisième conduite de retour (210, 310, 366) reliée au dispositif de chauffage (202, 302), configuré pour acheminer de l'eau de l'unité de chauffage du bâtiment vers le dispositif de chauffage (202, 302), et
- au moins un deuxième dispositif de soupape (370, 372) disposé dans la troisième conduite de retour (210, 310, 366), configuré pour acheminer de l'eau de la troisième conduite de retour (210, 310, 366) vers le deuxième réservoir d'eau chaude (226, 326) via au moins une quatrième conduite d'alimentation (368, 330).

9. Système de chauffage (200, 300) selon la revendication 8 et l'une des revendications 2 ou 4, 5, 7, **caractérisé en ce que** le dispositif de conversion d'énergie en chaleur (224, 324) comprend :
- au moins un troisième dispositif de mesure de température (380) configuré pour mesurer une troisième température d'eau de l'eau acheminée par la troisième conduite de retour (210, 310, 366),
- au moins un deuxième dispositif de mesure de température (236, 336) configuré pour mesurer une deuxième température d'eau de l'eau se trouvant dans le deuxième réservoir d'eau chaude (226, 326), et
- au moins un dispositif de commande (350) configuré pour commander le au moins un deuxième dispositif de soupape (370, 372) en fonction de la troisième température d'eau mesurée et de la deuxième température d'eau mesurée.

10. Méthode pour exploiter un système de chauffage (200, 300) selon l'une des revendications 2 à 9 précédentes, comprenant :
- mesurer une première température d'eau de l'eau acheminée par une première conduite de retour (214, 314) disposée entre un premier réservoir d'eau chaude (204, 304) et un dispositif de chauffage (202, 302) du système de chauffage (200, 300) fonctionnant au fioul ou au gaz,
- mesurer une deuxième température d'eau de l'eau se trouvant dans un deuxième réservoir d'eau chaude (226, 326),
- commander au moins un premier dispositif de soupape (228, 328) disposé dans la conduite de retour (214, 314) en fonction de la première température d'eau mesurée et de la deuxième température d'eau mesurée, de telle sorte que, lorsque la première température d'eau est inférieure à la deuxième température d'eau, l'eau provenant de la première conduite de retour (214, 314) est acheminée vers le deuxième réservoir d'eau chaude (226, 326) via au moins une deuxième conduite d'alimentation (230, 330), et
- commander le premier dispositif de soupape (228, 328) en fonction de la première température d'eau mesurée et de la deuxième température d'eau mesurée, de telle sorte que, lorsque la première température d'eau est égale ou supérieure à la deuxième température d'eau, l'eau est acheminée par la première conduite de retour (214, 314) vers le dispositif de chauffage (202, 302).
